# Europäisches Patentamt
# European Patent Office
# Office européen des brevets

(19)

(11) Publication number: **0 061 229**
**B1**

(12) **EUROPEAN PATENT SPECIFICATION**

(45) Date of publication of patent specification: **02.01.85**

(51) Int. Cl.⁴: **A 23 L 1/18, A 23 G 1/02**

(21) Application number: **82200343.0**

(22) Date of filing: **18.03.82**

(54) **A method for the production of processed cereal, expanded cereals, low bacteria count cocoa beans, hulled seeds, toasted seeds, and apparatus for performing said method.**

(30) Priority: **19.03.81 NL 8101345**

(43) Date of publication of application:
**29.09.82 Bulletin 82/39**

(45) Publication of the grant of the patent:
**02.01.85 Bulletin 85/01**

(84) Designated Contracting States:
**AT BE CH DE FR IT LI LU NL SE**

(56) References cited:
**FR-A- 855 149**
**FR-A-1 088 992**
**GB-A- 225 111**
**GB-A- 759 478**
**US-A-1 524 051**
**US-A-1 839 917**
**US-A-2 267 747**
**US-A-2 278 470**
**US-A-3 094 059**
**US-A-3 714 886**

(73) Proprietor: **B.V. Meelfabriek " WEERT " v/h Gebrs. van de Venne**
**Industriekade 38**
**NL-6001 SE Weert (NL)**

(72) Inventor: **Van Haaster, Joseph Nicolaas**
**Kennemerstraatweg 47**
**NL-1851 BA Heilo (NL)**
Inventor: **Van de Weide, Robert Jan**
**Krommeniedijk 78**
**NL-1562 GM Krommenie (NL)**

(74) Representative: **van der Beek, George Frans et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The application relates to heat and pressure processed cereals, expanded cereals, low bacteria count cocoa beans, hulled seeds, in particular oats, rice, cocoa beans and barley, toasted seeds, to a method for the production of this products as well as to an apparatus for performing said method.

In consequence of the introduction of intensive cattle breeding it has become desirable to remove the piglets from the sow at an earlier date so that the sow would be able to litter new pigs sooner again. These early weaned pigs require easily digested fodder just like the young pigs which are yet kept with the sow. Processed cereals are very suitable raw materials for these easily digested fodders. Likewise the sale of industrially prepared dog's and cat's food has increased every year upto the present in which fodders processed cereals are also favoured raw materials. Several techniques are known for processing cereal. Mention may be made of extruding, crushing or steam flaking, micronizing (IR-heating), high frequency heating (magnetron), explosion puffing or gun puffing, popping (hot air puffing) and drum drying.

In extruding the cereal is milled, moistened and passed through an extruder while the temperature is raised by means of steam. The product obtained has to be dried.

In crushing the grains are moistened, steamed at atmospheric pressure and crushed to thin flakes. In this case the final product has yet to be dried too.

In micronizing the cereal is treated by means of electromagnetic waves in the infrared range, which may be generated by means of gas flames or heated bodies of china clay. In high frequency heating the treatment is carried out by means of micro-waves having a frequency of for instance 2450 or 915 megacycles generated by high frequency generators.

In explosion puffing the cereal is treated with high pressure steam for some minutes in a closed vessel which may be mounted rotatably whereupon the lid is opened and due to the sudden drop in pressure the cereal is shot away while it expands. In hot air popping the cereal is treated with hot air or in a heated open pan. Certain cereals will puff thereby almost completely (popcorn) or only to the extent of part of the grains (milocorn, Plata corn). Thereby the interior of the grains comes to the outside and enlarges.

In drum drying a suspension of materials is passed over internally steam heated drums, dried thereon and scraped off again.

The aim of these techniques for processing cereals is to prepare the cereal, to gelatinize the starch in the cereal, in the desired degree and/or to improve the organoleptic characteristics (taste, appearance, odour).

By processing there is meant the reduction in size of particles so that the relative surface area is enlarged thus increasing the accessibility for attack by digestion enzymes. This is measured as the digestibility in animals or as the rate of attack by enzymes like for instance the starch splitting enzyme amyloglycosidase.

By gelatinizing there is meant such a treatment of the starch that it will form a paste with water. This is measured as the water binding capacity.

Taste, odour and appearance are usually measured by scale number tests or arbitrary judge.

In formulating animal fodders highly processed raw materials are preferred which are consumed by animals very willingly. It has been found that therein a high degree of gelatination is undesirable because this causes too high a viscosity of the intestinal contents, retards the action of digestion enzymes and increases the risk of a diarrhoea. In pigs a high degree of gelatination causes gastric ulcers.

Accordingly, a highly processed condition is desired but too high a degree of gelatination is detrimental.

This is of particular importance when cereals have to be used as a food for carnivores. Carnivores like dogs, cats, minks, fishes heardly dispose of starch splitting enzymes. This means that the cereals have to be rendered more easily digestible for these animals. A well processed product may also be of importance for other animals. In pigs for example the enzyme activity is initiated only slowly. As a consequence thereof young pigs digest raw cereals with more difficulty than at a later age.

Extruded cereal possesses the drawback that the coarser parts may escape the treatment whereby an irregular product is formed which moreover lacks in flavour. Solely milled cereal being suitable for processing the starting cereal can no longer be recognized in the product. Likewise the degree of gelatination is high.

By crushing, micronizing, magnetron cooking and hot air popping the degree of digestibility is increased only to a relatively slight extent whereas gun puffing yields a satisfactory product indeed but the only available very sophisticated apparature for this process is intended for production on small scale. The Dutch Patent Specification 92,843 describes especially a device for puffing cereal or a similar material by subjecting the same to heat and pressure and the sudden release of the pressure. This device is provided with a turntable having a number of processing or explosion chambers, mounted thereon radially, each one of said chambers having a sealing head which may be moved away from and back again to the end of the chamber opposite to the turntable, means at a point of the rotation cycle of the turntable for moving the sealing heads at a certain point of the cycle of the turntable in the sealing

2

position on the ends of the respective chambers and for locking the same, a means for supplying steam to the chambers and means at a further point of the said cycle for releasing the locking position of the sealing heads one after another at a further point of said cycle. This device is provided with a single steam supply chamber which is connected to each one of the explosion chambers by separate conduits. A plurality of means is provided therein in order to warrant opening and closure of the chambers at the proper moment. Such a device is very complicated and causes the inconvenience of a high noise level due to the character of the explosion cylinders. Wheat and rice are mentioned as the products for which the device is intended primarily.

Dutch Patent Specification 70,686 describes a similar device wherein likewise a number of pressure chambers are mounted on a rotatable support; the device likewise including means for opening and closing an inlet for cereal and steam and for releasing the pressurized cereals. In this device the steam inlet valve is usually kept open until the sealing is released. From the specification it appears that a relatively low pressure is used in the pressure chambers. Only at a later time a higher steam pressure is supplied. Again this device is very sophisticated and causes the inconvenience of a high noise level whereas the productivity is limited.

Surprisingly, it has now been found that in a process of the type described above high quality products are obtained by keeping the cereal, the cocoa beans or the seeds at a gauge pressure of at least 5 atmospheres, in general 5—50 atmospheres, in particular 5—35 atmospheres at a temperature of at least 200°C, preferably 200—300°C for at least 1 second, in general 1—30, preferably 3—13 seconds, while supplying heat and moisture by introducing steam through an inlet debouching in the bottom of the treating chamber and at the end of the desired treating time releasing the pressure at once by means of one or a number of conduits of a smaller diameter than their length including a valve mounted therein, said outlet or outlets running from the bottom of the treating chamber. The outlet conduit diameter may for instance be 25—254 mm, preferably 50—102 mm, in particular 63.5 mm.

It is particularly surprising that the products coming from the treating chamber may be discharged through a conduit having a relatively small diameter without clogging of this conduit. This is even possible in case of a long conduit. Likewise it is particularly surprising that the steam supply of the treating chamber will not be clogged by cereal or dust falling therein.

The degree of puffing may be influenced by selecting the diameter of the discharge conduit. A smaller conduit diameter is conducive to a higher degree of puffing.

Furthermore it has been found that the noise generation was less if the product was discharged by way of a conduit having a welding seam instead of a drawn seamless tube. This is contrary to expectations in view of the rougher surface of the former.

Furthermore it is particularly surprising that in this method no noise nuisance and discoloration occur as would be expected in view of the known artisan pressure processes. Other advantages are the following:

a) the product thus heat and pressure processed does not have to be dried, it is sufficient to cool without further special measures;

b) the energy consumption is low in relation to the degree of processing reached;

c) the product obtained possesses a particularly regular degree of processing in comparison with the known products. The regular processing is apparent from the absence or substantial absence of non puffed grains. Apart from some other data table A discloses the digestible starch content of some products. No standard being available for such a determination the results may be compared among each other though they cannot be compared as such with other results.

TABLE A

| corn (maize) | degradable starch (amyloglycosidase) | water binding capacity | appearance | odour |
|---|---|---|---|---|
| untreated | 14 | 2.4 | flour | fusty |
| extrusion | 39 | 8.5 | crumb | sickly |
| corn flakes | 29 | 3.8 | flake | sickly |
| micronizing | 19 | 3.0 | grain | slightly burnt |
| high frequency | 24 | 3.4 | grain | sickly |
| hot air | 17 | 3.0 | grain | toasted |
| drum drying | 45 | over 10.0 | flour | slightly toasted |
| invention | 44 | 4.3 | 2—8x grown | toasted |

In each one of the four assessments made the corn processed in accordance with the invention comes out favourably, this not being the case in any of the other methods for improving the digestibility

d) the deeply processed product obtained possesses a moderate degree of gelatination and good organoleptic characteristics;

e) the denaturation of the protein in the corn is low in comparison with the known methods;

f) the device according to the invention is suitable for large scale production and requires minimum attention only;

g) without particular measures the device according to the invention is suitable for processing a large number of raw materials, like for instance corn, broken corn, wheat, oats, barley and milo;

h) starting from these products one may produce a large number of final products by subjecting these products to an additional treatment, for instance starting from puffed maize:

| final product | treatment |
|---|---|
| baby corn | milling, pelletizing |
| broken corn | crushing and sieving |
| corn flakes | "flaking" |
| swelling flour | grinding very finely |
| fatty core | grinding coarsely |

i) the starch according to the invention is cold swelling, i.e. in an aqueous medium it will swell without heating being required;

j) the noise generation, like caused in gun puffing is reduced to a much lower level by discharging the product through a conduit instead of by opening a lid, the latter being accompanied by a loud bang;

k) of utmost importance herein is that the products obtained are easily digested and of good taste;

l) when applying the method according to the invention the raw material used may be recognized in the product because the product expands to all sides, so that no consumers' distrust will arise. Contrary thereto a complete modification of the appearance of the raw material occurs in extruding or hot air popping. Therein the water in the grain evaporates. The grain is blown by the vapour until this grain will burst. This causes the irregular structure of popcorn. When applying the method according to the invention the surface of the grains will remain closed more or less. From the photographs showing raw corn, extruded corn, micronized corn and corn treated in accordance with the invention, respectively, a properly performed processing is apparent.

The heat treatment in the presence of water is suitably carried out in a reaction vessel in which the cereal is heated to 200—300°C by introducing steam. If the corn is used as the starting material it is appropriate to first heat the corn to 60—80°C, preferably 68—72°C at a gauge pressure of 10—30 atmospheres, preferably 18—20 atmospheres. An appropriate residence time of the product to be treated is from 10—40 seconds, in particular 20 seconds. The duration of the total puffing cycle is for instance 1 minute. The stated conditions apply in particular to corn and wheat. An optional adjustment for other products may be carried out without difficulty.

Furthermore it became apparent that the discharge through a conduit having a smaller diameter led to a higher degree of puffing.

By selecting the diameter of the conduit leading to the expansion chamber the degree of puffing may be influenced. The result thus obtained is incomparable with the result obtained by mounting a valve in the conduit and opening this valve to a lesser or greater extent.

Hereby a larger diameter of the conduit gives rise to a lower degree of puffing. Accordingly it is apparent that the degree of puffing is not only influenced by the pressure differential and the degree of puffing may be influenced advantageously by choosing the diameter of the conduit.

Preferably the discharge opening to the expansion chamber is provided with a funnel shaped mouth piece. The diameter of the discharge conduit is however determined upstream of this mouth piece. Preferably the declination amounts to 6—10°, in particular 8° i.e. the mouth piece widens with this angle. Such a mouth piece has a favourable influence on the degree of processing. Furthermore the noise generation may be influenced by a suitable choice of the declination. Preferably the expansion chamber to be employed is provided with a conveyor belt for collecting the material falling down. Between the parts of the conveyor belt fresh air is blown in for cooling purposes. The injection of fresh air preferably occurs close to the discharge point of the cereal to be expanded.

Apart from the use in expanding cereal, in particular corn, the device may be utilized for preserving cocoa beans and hulling seed, in particular husking oats, the temperature, pressure etc. as a matter of course being adapted to the envisaged use.

In utilizing the device according to the invention for husking oats there is obtained in a simple way a high yield and a high degree of processing of the flake which is somewhat crisper and darker than the flake processed in the usual way.

The expanded product is cooled appropriately by passing air through the product.

For the conduits discharging the treated cereal from the puffer to the expansion chamber any material may be used which is resistant to the temperature, pressure, moisture content etc. occurring therein. It has been found that the use of welded steel pipe is of particular advantage. In view of its smoother character one would expect that a seamless pipe would have advantages. However, it has been found that in a welded pipe clogging does not occur in a higher rate whereas the noise generation is less.

Surprisingly it has moreover been found that the risk of overheating causing too dark colour and burnt smell could be reduced considerably by utilizing an indirect preheating, this surprisingly also resulting in a lower moisture content of the product. Consequently it became possible to use a much higher pressure than previously.

Cereal to be treated is preheated to 30—100°C, preferably to 60—80°C preferably in particular 68—72°C. Due to such a pretreatment a product is obtained which does not require drying. In heating above 80°C the risk of discoloration of the cereal increases.

Furthermore it has been found that the risk of clogging of the discharge conduit became less by removing fines from the cereal to be treated by sieving before the treatment, whereas one would expect indeed that smaller particles would decrease the risk of clogging. Surprisingly it has been found furthermore that the insertion of a waiting period between the termination of the introducing of steam and the initiation of the discharge of the product does not affect the degree of puffing detrimentally although the pressure dropped considerably during this waiting period. The regular character of the product was even improved.

Appropriately the treatment is carried out by sieving for removing those particles which are smaller than 0.1 to 0.9 times the mean diameter, preferably 0.2—0.3 times this diameter. Thereupon the thus sieved raw material is fed to a conditioner in which it is advantageously heated indirectly. Direct heating for instance by passing hot air therethrough results in a considerably lowered degree of puffing and a considerably decrease of the regularity of the degree of puffing. It is appropriate to heat to 30—100°C, preferably 60—80°C at atmospheric pressure.

The pressure to be applied in the treating chamber is chosen dependent on the kind of cereal to be processed.

Like already stated above it is appropriate to preheat the cereal to be processed. Due to such a pretreatment a product is obtained which does not have to be dried and remains somewhat better suitable for puffing whereas undesired discolorations and carbonisation phenomena do not occur. The duration of the heating is 3—150, preferably 25—35 minutes. In the treating chamber the grains of cereal are steam treated at the desired pressure whereupon a certain residence time is observed which is accompanied by a decrease in pressure though not in the degree of puffing. The gauge pressure is 5—35, preferably 15—25 atmospheres. The waiting period is 1—30, preferably 3—13 seconds. Hereby it is achieved that the percentage of non puffed grains becomes lower. (If fed to dogs these non-puffed grains are not digested and remain visible in the excrements). Hereafter the cereal is discharged. The duration of the entire cycle is for instance 1 minute.

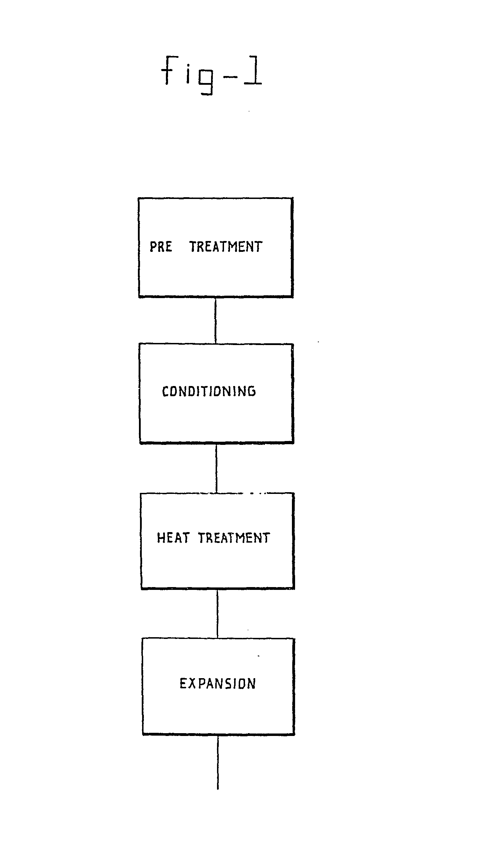

The processing steps to which the cereal to be treated is subjected may be described with reference to the flow sheet represented in Fig. 1.

In step I thereof pretreating occurs in which the cereal is purified. In step II conditioning occurs, in which the cereal is preheated, whereas in step III saturated steam is introduced until a temperature of from 200—300°C is reached. When the adapted residence time has elapsed the reactor is discharged and the treated cereal is shot into the expansion chamber where the expansion takes place.

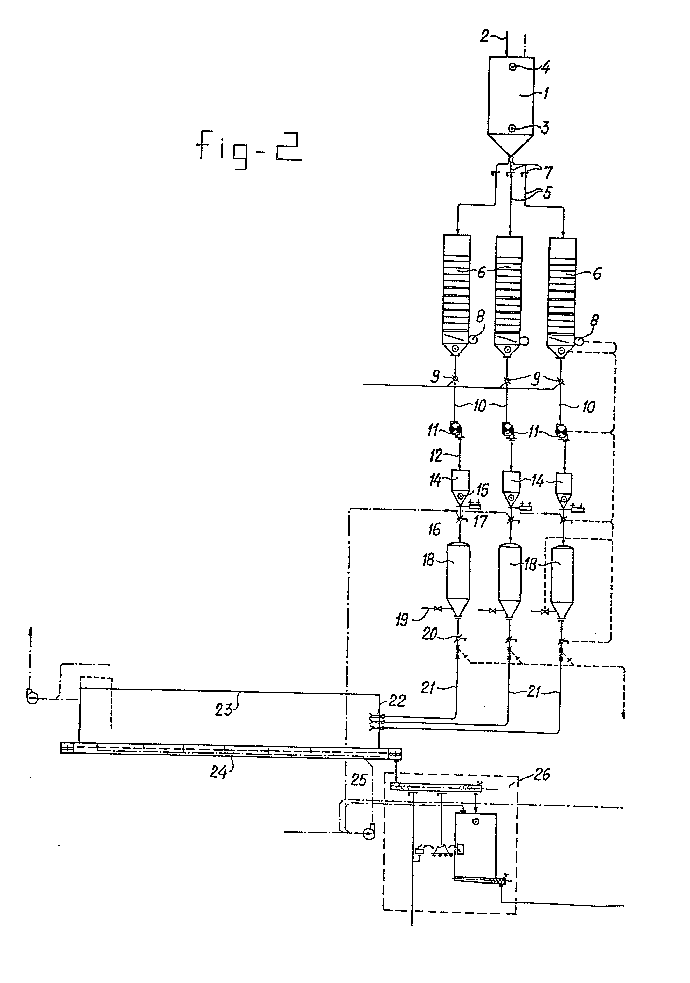

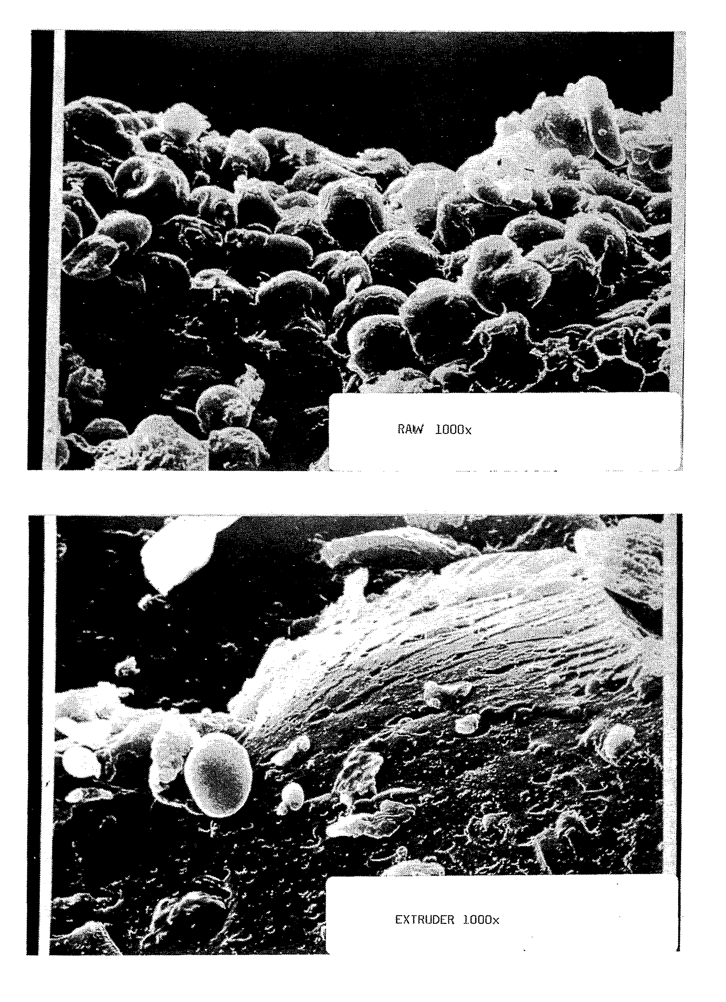

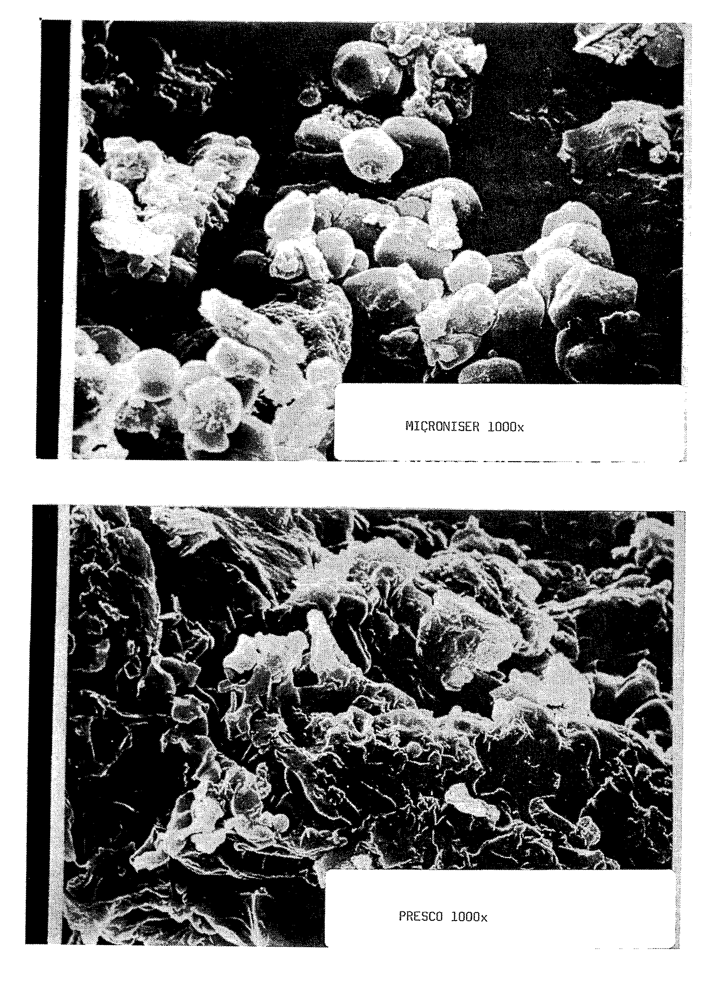

The apparatus used may be elucidated with reference to Fig. 2. In this figure 1 is a hopper, which is supplied with the cereal to be processed through supply conduit 2. It is suitable to provide this hopper with an indicator 3 for signalling the empty condition and an indicator 4 for signalling the filled condition which may aid in automatically controlling the supply. By one or more outlets 5 the hopper is connected to one or more pretreating chambers 6. In the conduits 5 there is mounted a shut off means 7. The treating chambers 6 are provided with not shown heating means for preheating the cereal. An indicator means 8 for signalling the empty condition is suitably mounted in the lower part of these treating chambers. Through a conduit 10 including a shut off valve 9 these treating chambers are connected to a metering device 11. A metered dose is charged by the metering device through conduit 12 into a small hopper 14 which is provided with an indicator 15 for signalling the empty condition and which hopper by way of conduit 16 including a shut off valve 17 is connected to puffer 18. The puffer 18 is provided with means for introducing steam 19. In the puffer 18 the cereal to be treated is brought at the required temperature and pressure. By opening the valve 20 it is then blown away through conduit 21 and arrive via nozzle 22 in the expansion chamber 23 which in the present case is provided with a conveyor belt 24 and a blowing means for blowing in fresh air 25. The puffed cereal is conveyed by the conveyor belt 24 to a storage room which may yet be provided with other auxiliary means.

When operating such a device corn possesses usually a moisture content of about 15% and a bulk density of 720 kg/m$^3$ before processing the same. After processing the moisture content is about 13% by weight and the bulk density 200 kg/m³. When using wheat this possesses usually a moisture content of about 16% by weight and as bulk density of 750 kg/m³ before processing the same. After processing the moisture content of the wheat is 14% by weight and the bulk density 200 kg/m³.

Example I

7 Kg unhusked American oats having a moisture content of 11.5% by weight was brought at a pressure of 8 atmospheres and kept at this pressure for 2—3 seconds and then shot away and separated on a so called labofix. Thereby the following result was obtained.

|  | kernel= | husk= |
|---|---|---|
| yield | 80.7% by wt. | 23.6% by wt. |
| moisture | 17.0% by wt. | 15.8% by wt. |
| husk | 4.4% by wt. | — |
| starch | — | 5.5% by wt. |
| degradable starch | 24.3% by wt. | — |
| colour | slightly brown | moderately brown |

Husk+kernel together make more than 100% due to the increase in moisture content. In this example already browning occurred whereas the husking was not yet sufficient.

The test was repeated while applying another pressure retention time.

| time, including 22 seconds preheating= | husking effect= |
|---|---|
| 25 sec. | 69% |
| 35 sec. | 74% |
| 45 sec. | 78% |

Hence one may be satisfied with lower husking effects and separate the paddy from the kernel and recycle the same; however this renders the method less simple.

On the average the paddies present in the kernel after puffing and husking had a greater length than the kernels.

By means of a small sorting machine they could be sorted from the kernel (adjustment=$9\frac{1}{2}$ mm holes in the wall, recepticle in the lowermost position, keeping the sorting machine adequately filled). Then the question arises whether after recycling the paddy to the puffer it was indeed husked this second time, if not, it will circulate over and over again and gather in the circulation causing a considerable reduction of the production capacity. In order to ascertain this the following test is performed:

Provide 4 kg USA oats, sieve (to remove the corn therefrom), dry to moisture content of from 10 to 11% by weight, pressurize at 81 atmospheres (on the gauge) for 45 seconds and puf, cool, separate husk material and sort out paddy on the labofix, add the paddy to the following dried charge of 4 kg and repeat the cycle 6 times.

This yielded the following results:

| Charge | kg husk | kg kernel | kg paddy | wt % loose husk in kernel | wt % paddy in kernel | wt % moisture in kernel |
|--------|---------|-----------|----------|---------------------------|----------------------|--------------------------|
| 1 | 0.5 | 2.7 | 0.8 | 0.8 | 14 | 14.2 |
| 2 | 0.75 | 3.2 | 0.85 | 1.2 | 9 | 15.7 |
| 3 | 0.8 | 3.0 | 0.9 | 1.0 | 6 | 16.6 |
| 4 | 0.7 | 3.5 | 0.7 | 1.0 | 10 | 16.5 |
| 5 | 0.7 | 3.5 | 0.6 | 0.8 | 9 | 16.5 |
| 6 | 0.7 | 3.5 | 0.6 | 1.4 | 9 | 17.2 |

The paddy contained always some loose husk material (0.5—1.0% by weight) and 10—15% by weight of kernel.

Accordingly, the percentage of paddy did not increase, the contrary would seem more likely.

The yield

The U.S.A. oats used had a husk content of 22.5%, the theoretical yield of processed fodder oats thus, excluding differences in moisture content, being 77.5% containing 0% by weight of husk or 79% containing 2% by weight of husk. In the above test 4 kg oats yielded 3.4 kg of kernel, corresponding to 85%. when taking account of the increase in moisture content and too much husk this becomes 78%, thus very close to the yield theoretically obtainable. Even if processing losses of 2% are assumed, these 78% is about 7% more than the *average* industrial yield. It is even visible that the yield is better because all kernels remain intact, no tips are broken off.

Quality of product

The kernel obtained by the latter tests was rolled in order to determine how the digestibility of the starch would be.

|  | "puffed" fodder oats (USA) | normally processed fodder oats (Fr.) |
|--|----------------------------|--------------------------------------|
| moisture | 16.7% by wt | 12.6% by wt |
| starch | 51.0% by wt | 56.8% by wt |
| digestible starch | 24.2% by wt | 22.6% by wt |
| relative digestibility of starch | 47.5% by wt | 39.8% by wt |

Hereby it becomes apparent that the digestibility of the processed fodder oats thus obtained is high with respect to the normally processed fodder oats. The colour and strength of a flake are less. The colour may however be effected.

Example II

Corn having a moisture content of 13% by weight was preheated to a temperature of 70°C and portions of 40 and 45 kg of corn were metered into the puffer. This corn was brought at the steam pressure of 19 atmospheres gauge. After a retention time of 20 seconds the product was shot into the expansion chamber where it was cooled by means of ambient air. There was obtained a corn having a bulk density of 200 kg/m³ and an amyloseglycosidase degradability of 39.

Example III

The same conditions like in Example II were applied for processing wheat in the device shown in Fig. 2. The wheat used possessed a moisture content of about 16% by weight and a bulk density of 750 kg/m³. The wheat was fed to the puffer in smaller portions i.e. portions of from 30 to 35 kg.

After processing the wheat possesses a moisture content of 14% by weight and a bulk density of 200 kg/m³. The amyloglucosidase degradability of the starch was 41.

In other tests there was found a varying degradability of the starch dependent on the applied conditions. For wheat this variation ranged from 36 to 46.

Comparative test I

In a semi-industrial plant curacao rice, French oats, home grown wheat, barley, USA corn and USA milo corn are puffed, husked and ground to finer than 125 $\mu$m. The products obtained as well as some comparable calf's milk raw materials are analysed.

Results of analysis

| | rice (paddy) | oats | wheat | barley | corn | milo | "nutra lijs" | rye flour | dema |
|---|---|---|---|---|---|---|---|---|---|
| moisture | 9.5 | 8.5 | 11.2 | 11.4 | 7.8 | 8.3 | 7.5 | 13.8 | 11.5 |
| fat, be | 2.2 | 6.8 | 2.3 | 2.5 | 4.5 | 3.3 | 0.1 | 1.5 | 0.5 |
| raw cell material | 0.9 | 0.9 | 1.0 | 0.9 | 0.6 | 1.4 | 0.0 | 0.3 | 0.0 |
| ash | 1.3 | 1.6 | 1.2 | 1.4 | 1.2 | 1.3 | 16.4 | 0.9 | 0.4 |
| raw protein | 6.6 | 13.3 | 10.4 | 8.2 | 7.3 | 7.7 | 0.0 | 7.5 | 0.0 |
| ppm Fe | 150 | 175 | 150 | 130 | 110 | 100 | 15 | 20 | 5 |
| starch | 74 | 61 | 67.5 | 65 | 74 | 71 | 77 | 66 | 81 |
| degradable starch | 52 | 44.5 | 50.5 | 47.5 | 51.5 | 51.5 | ?*) | 38.5 | 49 |
| water binding | 6.7 | 5.7 | 6.4 | 5.0 | 5.7 | 6.4 | ?*) | 2.1 | 7*) |
| amylogram **) | 500 | 420 | 300 | 210 | 220 | 360 | 1000 | 0 | 180 |
| cost % kg | — | — | — | — | — | — | 81 | 66 | 90 |

*) irreliable analysis due to formation of lumps.
**) in Brabender units, 50 grams, 400 water, 30° constant, value after 15 minutes (At *higher* temperature the values were *decreasing*).

From these analytical results it is clear that there are only slight differences between the several cereals when compared with each other.

A comparison of some products (those having the lowest husk content) gives rise to the following summary in which the characteristics are in the order of decreasing importance:

|  | corn swelling meal | wheat swelling meal | "nutralijs" | rye flour | dema starch |
|---|---|---|---|---|---|
| degree of accessability | good | good | good | moderate | good |
| thickening power | good | good | very good | poor | good |
| protein content | good | good | poor | good | poor |
| iron content*) | poor | poor | good | good | good |
| colour | good | moderate | good | good | good |
| ash content | good | good | very poor | good | good |

*) the swelling meals may possibly have an increased iron content due to little use of the testing apparatus (formation of rust).

Example IV

Both cold and indirectly preheated (23 minutes at 73°C) wheat having an initial moisture content of 14% was purified and processed at different stream pressures and discharged after waiting 7 seconds and cooled.

Volume determinations gave the following results:

| steam pressure atmospheres gauge | cold wheat | | preheated wheat | |
|---|---|---|---|---|
| | bulk density | moisture | bulk density | moisture |
| 12 | 0.28 | 14.4 | 0.23 | 12.8 |
| 14 | 0.24 | 14.8 | 0.20 | 12.6 |
| 16 | 0.20 | 14.9 | 0.18 | 12.9 |
| 18 | 0.18 | 15.0 | 0.16 | 13.2 |

Accordingly it is apparent that the expansion of already preheated wheat is somewhat easier. After processing the preheated wheat possesses moreover a lower moisture content so that drying may be omitted.

Example V

Corn having a moisture content of 14% was purified, preheated or not, steamed at variable pressure, kept hot for 12 seconds, discharged and cooled. In addition to the bulk density the odour and colour also assessed. The following results were obtained:

A. When indirectly preheating to 68°C within 30 minutes

| Treating pressure, atmospheres gauge | bulk density | colour | odour |
|---|---|---|---|
| 15 | 0.25 | pale yellow | sickly |
| 17.5 | 0.22 | pale yellow | toasted |
| 20 | 0.20 | pale yellow | toasted |
| 22.5 | 0.17 | pale yellow | toasted |
| 25 | 0.13 | pale yellow | toasted |
| 27.5 | 0.09 | dark yellow | slightly burnt smell |

B. Without indirectly preheating the result was:

| 15 | 0.29 | pale yellow | toasted |
|---|---|---|---|
| 17.5 | 0.25 | slightly darkened | slightly burnt |
| 20 | 0.21 | darkened | burnt |
| 22.5 | 0.18 | strongly darkened | burnt |

When applying the preheating step there is found less coloration and burning at a comparable degree of expansion.

Example VI

Corn having a moisture content of 14% was purified, preheated to 72°C within 26 minutes, steamed under pressure to 23 atmospheres gauge for 23 seconds, discharged from the pressure vessel after a variable waiting time and cooled. The bulk density, the percentage of non expanded grains, the colour and odour were determined. The following results were obtained:

| waiting time seconds | bulk density | % not expanded | colour | odour |
|---|---|---|---|---|
| 1 | 0.195 | 2.5 | pale yellow | slightly toasted |
| 5 | 0.200 | 1.5 | pale yellow | slightly toasted |
| 10 | 0.195 | 1.0 | pale yellow | slightly toasted |
| 15 | 0.190 | 0.7 | pale yellow | slightly toasted |
| 20 | 0.195 | 0.4 | pale yellow | slightly toasted |

By observing a waiting period the number of not expanded grains decreases whereas neither colour nor odour are detrimentally affected.

Example VII

Barley having a moisture content of 14% was purified and preheated to 63°C within 38 minutes. Thereupon the grains were brought at a gauge pressure of 24 atmospheres by means of steam in the treating chamber for 25 seconds. Thereupon the product was shot away either through a pipe having an inner diameter of 51 mm or a pipe having an inner diameter of 76 mm. Determination of the bulk density over 5 cycles for both kinds of pipe yielded the following results in kilograms per liter.

| 51 mm pipe | $0.14^3$ | $0.12^4$ | $0.11^8$ | $0.12^0$ | and | $0.11^5$ |
|---|---|---|---|---|---|---|
| 76 mm pipe | $0.19^0$ | $0.18^2$ | $0.17^9$ | $0.18^5$ | and | $0.18^2$ |

Contrary to expectations the less obstructed passage through the larger pipe did not cause greater expansion but a lesser expansion.

11

# 0 061 229

Example VIII

A pressure vessel for test purposes was built while providing the same with three separate steam inlets capable of being opened and closed: that is in the bottom, in the middle of the side wall and at the top part of the side wall, respectively. Corn was treated with steam admitted successively through one of the three inlets. The following measurements were made.

| steam admitted at | bulk density after processing, kg/l |
|---|---|
| bottom | 0.21 |
| middle | 0.26 |
| top | 0.36 |

The best expansion result was obtained by steam admission at the bottom, no clogging of the steam inlet at the bottom occurred even after frequent use.

Example IX

In two samples of untreated cocoa beans the bacteria count was determined and assessed at 2,300,000 and 480,000 bacteria per gram. Corresponding lots of cocoa beans were processed in accordance with the method of the invention and sampled when leaving the expansion chamber. Thereby there were found 600 and 300 bacteria per gram, respectively. Accordingly it appears that 99.97 and 99.94% of the bacteria, respectively, are killed by the treatment according to the invention.

Example X

The noise generation was determined upon discharging the product a) without any discharge pipe, b) through a coupled discharge pipe having a welding seam, c) through a coupled seamless discharge pipe and e) with closed across port to the expansion tunnel. In the cases a, b and c the access port to the expansion room was opened. Both pipes had an inner diameter of 102 mm and a wall thickness of 5 mm. The loudness was measured by means of a general radio, type 1933 sound analysis system meter. Measurements were made both in the middle of each one of the octave bands in the audible range and with an A-filter. The measurements were performed at a distance of 2 meters from the discharge point of the pressure vessel and perpendicular to the discharge direction.

Under these conditions the dB(A) values were as follows:
a) 125 dB(A)
b) 114 dB(A)
c) 111 dB(A)
d) 102 dB(A)

The use of a discharge pipe causes a drastic reduction of the noise generation in comparison with directly discharging. The seamless pipe generates more noise than the pipe having a welding seam. Likewise the discharge into a separate insulated room results in a drastic reduction of the loudness during the discharge and when measured at the same measuring point.

Example XI

The schedule was as follows:
BV 95 — Baby-start-grain including 56.9% of raw corn
BV 96 — Baby-start-grain including 56.9% of baby-corn (product of the invention).
BV 97 — Baby-start-grain including 36.9% of raw corn+20% of baby-corn.
Farm: Experiment farm "Reigersbosch" at Wijde Wormer.
Animals: 22 pigs from own sows+14 pigs originating from Smit, Heiloo.
Accommodation: Ground pens Section I of pigs shed, 6 pigs per pen.
Testing period: 6 weeks.

Discussion
Test proceeding

Apart from a single case of diarrhoea the first week passed without problems. Deviation did not occur.

Growth

The growth of the pigs was good. The best growth was achieved by group BV 97 (raw corn+baby-corn). This is followed by group BV 96 (baby-corn). The group on raw corn (BV 95) lagged behind somewhat in growth. This group included one animal not growing well. Even if this animal is left out of consideration the growth of this group falls noticebly behind in comparison with the other two groups. If the growth of group BV 95 (raw corn) is assumed to be 100, the index figures are as follows:

| | BV 95 | BV 96 | BV 97 |
|---|---|---|---|
| growth 0—2 weeks | 100 | 95.0 (91.4) | 128.0 (123.1) |
| 2—4 weeks | 100 | 105.1 (100.8) | 136.7 (131.2) |
| 4—6 weeks | 100 | 144.2 (137.9) | 113.8 (108.8) |
| 0—6 weeks | 100 | 119.9 (114.9) | 124.3 (119.1) |

The difference in growth between BV 95 and BV 97 is significant. The difference in growth within the groups is slightest for group BV 97 and most substantial for group BV 95.

Fodder consumption

In this test the fodder consumption was very good. The highest consumption was found for group BV 97 (corn+baby corn) totalling 44.93 kg.

The group on raw corn (BV 95) had the lowest consumption. If the fodder consumption of group BV 95 (raw corn) is assumed to be 100 the index figures are as follows:

| | BV 95 | BV 96 | BV 97 |
|---|---|---|---|
| fodder consumption | | | |
| 0—2 weeks | 100 | 90.9 | 103.0 |
| 2—4 weeks | 100 | 101.3 | 108.9 |
| 4—6 weeks | 100 | 105.0 | 107.4 |
| 0—6 weeks | 100 | 101.2 | 107.0 |

Fodder costs per one kilogram of growth

The fodder costs per one kilogram of growth are the lowest for group BV 97 followed by BV 96 whereas group BV 95 has the highest fodder costs per one kilogram of growth, even if the worst grower is omitted.

Discussion

At the experiment farm a baby pig test was performed in order to test baby-start grain including 56.9% of raw corn, 56.9% of baby corn and as the third 36.9% of raw corn+20% of baby corn, respectively. Drop out did not occur, though in group BV 95 there was one poorly growing pig which indeed affected the result of this group. If this poorly growing pig is left out of consideration even then the result of this group is the least favourable of the three.

Summary

1. At the experiment farm a baby pig test was performed in order to compare fodders containing raw corn with fodders containing baby corn.

2. The fodders containing baby corn caused a better growth, fodder consumption and conversion.

3. The fodder costs per one kilogram of growth were also lower for the fodders containing baby corn.

**0 061 229**

Table average results

| | BV 95 | BV 96 | BV 97 |
|---|---|---|---|
| Number of animals | 12 | 12 | 12 |
| Initial-weight | 9 | 8.9 | 8.9 |
| **Growth** | | | |
| 0—2 weeks | 5.00 (5.2) | 4.75 | 6.40 |
| 2—4 weeks | 5.85 (6.1) | 6.15 | 8.00 |
| 4—6 weeks | 8.70 (9.1) | 12.55 | 9.90 |
| 0—6 weeks | 19.55 (20.4) | 23.45 | 24.30 |
| **Fodder consumption** | | | |
| 0—2 weeks | 8.25 | 7.50 | 8.50 |
| 2—4 weeks | 12.09 | 12.25 | 13.17 |
| 4—6 weeks | 21.66 | 22.75 | 23.26 |
| 0—6 weeks | 42.00 | 42.50 | 44.93 |
| **Fodder conversion** | | | |
| 0—2 weeks | 1.65 | 1.58 | 1.33 |
| 2—4 weeks | 2.07 | 1.99 | 1.65 |
| 4—6 weeks | 2.49 | 1.81 | 2.35 |
| 0—6 weeks | 2.15 (2.06) | 1.81 | 1.85 |

Test compositions

| | BV 95 | BV 96 | BV 97 |
|---|---|---|---|
| corn | 56.9 | — | 36.9 |
| baby corn | — | 56.9 | 20.— |
| skimmed milk powder | 12.— | 12.— | 12.— |
| soya 50% | 13.85 | 13.85 | 13.85 |
| middlings | 10.— | 10.— | 10.— |
| beef fat | 2.5 | 2.5 | 2.5 |
| meat meal | 3.— | 3.— | 3.— |
| dibadox | 0.1 | 0.1 | 0.1 |
| covicoot | 0.1 | 0.1 | 0.1 |
| methomix | 0.35 | 0.35 | 0.35 |
| sow. min. kern. | 1.— | 1.— | 1.— |
| copper premix | 0.2 | 0.2 | 0.2 |
| | 100.— | 100.— | 100.— |

Dibadox=150 ppm dimetridazol
50 ppm carbadox
in the fodder.

14

# 0 061 229

analysis baby-start grain
Analyzed:

|  | BV 95 | BV 96 | BV 97 | baby corn |
|---|---|---|---|---|
| moisture | 11.8 | 11.2 | 11.4 | 12.4 |
| fat | 5.6 | 5.2 | 5.4 | 3.7 |
| raw protein | 17.4— 17.1 | 18.3— 18.7 | 18.4— 18.7 | 9.5 |
| ash | 4.7 | 4.7 | 4.9 | 1.4 |
| raw cell material | 3.2 | 2.6 | 2.6 | 2.0 |
| starch EEG | 43.5 | 42.5 | 43.0 | 62.5 |
| starch hydrolyzed by amyloglucosidase | | | | |

Example XII

Different test fodders were supplied to two groups of 12 piglets each, the fodders differing only therein that fodder A contained 20% more of untreated corn, than the fodder B. Instead thereof the fodder B contained 20% of corn processed in accordance with the invention. At the beginning of the test the piglets had an average weight of 9 kg. During the test the following results were obtained:

|  | piglets consuming fodder A | piglets consuming fodder B |
|---|---|---|
| growth 0—2 weeks | 5.00 | 6.40 |
| growth 2—4 weeks | 5.85 | 8.00 |
| growth 4—6 weeks | 8.70 | 9.90 |
| growth 0—6 weeks | 19.55 | 24.30 |
| fodder consumed 0—2 weeks | 8.25 | 8.50 |
| fodder consumed 2—4 weeks | 12.09 | 13.17 |
| fodder consumed 4—6 weeks | 21.66 | 23.26 |
| fodder consumed 0—6 weeks | 42.00 | 44.93 |
| fodder conversion, kg fodder/kg growth | | |
| 0—2 weeks | 1.65 | 1.33 |
| 2—4 weeks | 2.07 | 1.65 |
| 4—6 weeks | 2.49 | 2.35 |
| 0—6 weeks | 2.15 | 1.85 |

The piglets fed with the fodder B containing corn according to the invention consumed 7% by weight more than the piglets supplied with the fodder A. The growth of the pigs of group B was 24% better than that of group A and the fodder conversion in the pigs of group B was better with 16%.

Example XIII

6 German dog hounds were supplied with test fodders for 4 weeks. Fodder A contained 56% by weight of extruded corn contrary to fodder B containing 56% by weight of the processed corn prepared in accordance with the method of the invention. The amount of solid excrements were weighed daily. It

15

is desired that this amount is low because the environmental contamination will then be less. Thereafter the fodders were exchanged. The results were as follows:

|  | fodder A | fodder B |
|---|---|---|
| daily amount of excrements in grams | 935 | 833 |

The corn processed in accordance with the invention was conducive to less excrements than extruded corn.

The same dogs were fed a blend of extruded corn and corn processed according to the invention in a weight ratio of 1:1 for a week. In this period a taste preference test was performed four times by putting two trays containing extruded corn and corn processed according to the invention, respectively, before the animals and removing the above blend. The preference results were:

| | |
|---|---|
| preference for extruded corn | 0 times |
| preference for the corn processed according to the invention | 14 times |
| no difference | 6 times |

When left at free choice the dogs will usually select the corn treated in accordance with the invention.

Example XIV

6 German dog hounds were given either fodder A or fodder B. The amount was 1 kg per animal per day. The fodder A contained 22.5% by weight of corn flakes according to the invention and 22.5% wheat flakes according to the invention and 55% by weight other constituents.

The cereal flakes were prepared by processing the cereal in accordance with the method of the application and furthermore removing the husks loosened in expanding the grains of the cereal and then rolling the remaining materials. The fodder B contained the same 55% by weight of other constituents, 22.5% by weight of wheat flakes prepared by flaking wheat on a flaking roller and 22.5% by weight of corn flakes prepared by crushing corn, moistening the same to 18% moisture, steaming at 95°C, flaking on a flaking roller, drying and cooling. The solid excrements of the dogs were collected and weighed daily. The results were:

| | fodder A containing flakes according to the invention | fodder B containing usual flakes |
|---|---|---|
| grams of excrements per day | 462.9 | 612.3 |

The fodder containing 45% by weight of flakes according to the invention caused appreciably less excrements than the corresponding fodder containing the usual flakes.

Example XV

Corn was processed in accordance with the method and additionally ground. The processed corn as well as the non-processed corn were worked up to an animal fodder for young pigs. In fodder A there was used 56.9% of raw corn and in fodder B 56.9% of the corn processed in accordance to the invention. In pigs each weighing 5 to 12 kg the digestion coefficients of the two fodders were measured. There were obtained 60 results in total. When substituting 56.9% by weight of corn according to the invention in fodder B form 56.9% by weight of raw corn in fodder A the following average increase in digestibility of the total ration occurred:

| | |
|---|---|
| dry material | 4.4% |
| raw protein | 4.0% |
| raw fat | 7.4% |
| other carbohydrates | 3.0% |
| raw cell material | 11.6% |

Comparative test II

A sample of ground corn according to the invention as well as extruded corn was fractionated by sieving. In each one of the fractions the degree of degradability was determined. In the untreated corn taken from the same lot the measured amount of degradable starch was 17%.

| | extruded corn | | corn according to the invention | |
|---|---|---|---|---|
| | % wt. fraction | % degradable starch | % wt. fraction | % degradable starch |
| over 0.75 mm | 37 | 20 | 35 | 42 |
| 0.75—0.45 mm | 21 | 31 | 23 | 44 |
| 0.45—0.30 mm | 15 | 49 | 18 | 43 |
| below 0.30 mm | 28 | 53 | 24 | 48 |

From this it is apparent that the coarse parts of the extruded corn meal show a but moderate degradability; in the corn meal according to the invention the coarse parts show a good degradability.

Comparative test III
    In a plant in operation the sieve plate separating the fines from the corn was removed from the purifying device for some hours so that unsifted corn had to be processed. The clogging number in the discharge pipe was 14 per 1000 cycles compared with usually less than 1 per 1000 cycles.

**Claims**

1. A method for the production of processed cereals, for imparting a low bacteria count to cocoa beans, for hulling and toasting seeds by subjecting the cereal, cocoa beans or seeds in treating chamber to a heat treatment in the presence of water at elevated pressure and then quickly releasing the pressure and optionally milling, pelletizing, crushing and sifting, flaking, grinding, coarsely or very finely the product obtained, characterized by keeping said cereal, said cocoa beans or said seeds at a gauge pressure of at least 5 atmospheres (5.1 bar) at a temperature of 200—300°C for at least one second, while supplying heat and moisture by introducing steam through an inlet debouching in the bottom of the treating chamber and at the end of the desired treating time releasing the pressure at once by means of one or or a number of conduits of a diameter smaller than their length, including a valve mounted therein, said conduit or conduits running from the bottom of the treating chamber.
    2. The method according to claim 1, characterized by preheating the cereal at from 70 to 80°C before the said treatment.
    3. The method according to claim 2, characterized by preheating the cereal for 3—120 minutes.
    4. The method according to claim 3, characterized by preheating the cereal for 30—35 minutes.
    5. The method according to claims 1—4, characterized by applying a gauge pressure of 15—25 atmospheres (15.2—25.3 bar).
    6. The method according to claims 1—5, characterized by using a retention time in the treating chamber of from 3—10 seconds.
    7. The method for hulling seeds and imparting a low bacteria count to cocoa beans, characterized by subjecting said seeds or cocoa beans in a treating chamber at elevated pressure to a heat treatment with water while supplying heat and moisture in the form of steam through an inlet debouching in the bottom of the treating chamber and then releasing the pressure at once by means of a discharge conduit having a diameter smaller than its length including a valve mounted therein.

    8. An apparatus suitable for carrying out the method according to claims 1—7, characterized by a conditioning vessel, a treating chamber provided with a steam inlet debouching into the bottom and a conduit having a diameter smaller than its length likewise debouching in the bottom and having a valve mounted therein and which outlet debouches into an expansion chamber while the conditioning vessel and treating chamber are connected to each other by way of a conduit that may be closed.

    9. The apparatus according to claim 8, characterized in that the treating chamber and the expansion chamber are connected to each other by means of a welded steel pipe.
    10. The apparatus according to claims 8 and 9, characterized in that the cereal inlet in the expansion chamber is provided with an exchangeable nozzle.
    11. The apparatus according to claim 10, characterized in that the exchangeable nozzle possesses a declination of from 6 to 10°.

**Patentansprüche**

    1. Verfahren zur Herstellung von aufbereitetem Getreide und dergleichen (cereals), zur Erzielung einer niedrigen Bakteriendichte an Kakaobohnen, zum Enthülsen und Rösten von Samen, wobei das Getreide, die Kakaobohnen oder die Samen in einer Behandlungskammer in Gegenwart von Wasser bei erhöhtem Druck wärmebehandelt werden und dann der Druck schnell abgelassen und das erhaltene

17

Erzeugnis grob oder sehr fein wahlweise gemahlen, pelletisiert, gequetscht und gesiebt, zu Flocken verarbeitet und zerkleinert wird, dadurch gekennzeichnet, daß das genannte Getreide, die genannten Kakaobohnen oder die genannten Samen bei einem Überdruck von wenigstens 5 Atmosphären (5,1 bar) auf einer Temperatur von 200 bis 300°C für wenigstens 1 Sekunde gehalten werden, während Wärme und Feuchtigkeit durch Einleiten von Dampf durch einen in den Boden der Behandlungskammer einmündenden Einlaß zugeführt werden, und daß am Ende der gewünschten Behandlungszeit der Druck plötzlich abgelassen wird mittels einer oder mehrerer Leitungen mit einem Durchmesser, der kleiner als ihre Länge ist, und mit einem eingebauten Ventil, wobei die genannte Leitung oder die Leitungen vom Boden der Behandlungskammer ausgehen.

2. Verfahren nach Anspruch 1, gekennzeichnet durch Vorwärmen des Getreides mit 70 bis 80°C vor der genannten Behandlung.

3. Verfahren nach Anspruch 2, gekennzeichnet durch Vorwärmen des Getreides für 3 bis 120 Minuten.

4. Verfahren nach Anspruch 3, gekennzeichnet durch Vorwärmen des Getreides für 30 bis 35 Minuten.

5. Verfahren nach den Ansprüchen 1 bis 5, gekennzeichnet durch Anwenden eines Überdruckes von 15 bis 25 Atmosphären (15,2 bis 25,3 bar).

6. Verfahren nach den Ansprüchen 1 bis 5, gekennzeichnet durch Aufwenden einer Verweilzeit in der Behandlungskammer von drei bis zehn Sekunden.

7. Verfahren zum Enthülsen von Samen und zur Erzeugung einer niedrigen Bakteriendichte an Kakaobohnen, dadurch gekennzeichnet, daß die genannten Samen oder Kakaobohnen in einer Behandlungskammer bei erhöhtem Druck einer Wärmebehandlung mit Wasser unterworfen werden, während Wärme und Feuchtigkeit in Form von Dampf durch einen in den Boden der Behandlungskammer einmündenden Einlaß zugeführt werden, und daß dann der Druck plötzlich abgelassen wird mittels einer Auslaßleitung mit einem Durchmesser, der kleiner als ihre Länge ist, und mit einem eingebauten Ventil.

8. Vorrichtung, die geeignet ist zur Durchführung des Verfahrens nach den Ansprüchen 1 bis 7, gekennzeichnet durch ein Konditioniergefäß, eine Behandlungskammer mit einem in den Boden einmündenden Dampfeinlaß und einer gleicherweise in den Boden einmündenden und ein eingebautes Ventil aufweisenden Leitung mit einem Durchmesser, der geringer als ihre Länge ist, welcher Auslaß in eine Expansionskammer einmündet, wobei das Konditioniergefäß und die Behandlungskammer miteinander mittels einer Leitung verbunden sind, die geschlossen werden kann.

9. Vorrichtung nach Anspruch 8, dadurch gekennzeichnet, daß die Behandlungskammer und die Expansionskammer miteinander mittels eines geschweißten Stahlrohres verbunden sind.

10. Vorrichtung nach den Ansprüchen 8 und 9, dadurch gekennzeichnet, daß der Getreideeinlaß in die Expansionskammer mit einem auswechselbaren Mundstück versehen ist.

11. Vorrichtung nach Anspruch 10, dadurch gekennzeichnet, daß das auswechselbare Mundstück eine Schräge von 6 bis 10° aufweist.

## Revendications

1. Procédé pour produire des céréales traitées, pour diminuer le nombre de bactéries dansles fèves de cacao, pour décortiquer et griller des graines en soumettant les céréales, les fèves de cacao et les graines dans une chambre de traitement à un traitement thermique en présence d'eau à une pression élevée puis en libérant instantanément la pression et, facultativement, en moulant, granulant, concassant et triant, floconnant, broyant, de façon grossière ou très fine le produit obtenu, caractérisé par le fait que l'on maintient lesdites céréales, lesdites fèves de cacao ou lesdites graines à une pression manométrique d'au moins 5 atmosphères (5,1 bars) à une température de 200—300°C pendant au moins une seconde tout en apportant de la chaleur et de l'humidité par introduction de vapeur d'eau à travers une entrée débouchant dans le fond de la chambre de traitement et qu'à la fin du temps de traitement désiré, on libère la pression d'un seul coup au moyen d'un ou de plusieurs conduits d'un diamètre plus petit que leur longueur et comprenant une vanne qui y est montée, le ou lesdits conduits s'étendant à partir du fond de la chambre de traitement.

2. Procédé selon la revendication 1, caractérisé par un préchauffage des céréales à une température de 70 à 80°C avant ledit traitement.

3. Procédé selon la revendication 2, caractérisé par un prétraitement des céréales pendant 3—120 minutes.

4. Procédé selon la revendication 3, caractérisé par un prétraitement des céréales pendant 30—35 minutes.

5. Procédé selon les revendication 1—4, caractérisé par l'application d'une pression manométrique de 15—25 atmosphères (15,2—23,3 bars).

6. Procédé selon les revendications 1—5, caractérisé par l'utilisation d'un temps de maintient dans la chambre de traitement de 3—10 secondes.

7. Procédé pour décortiquer des graines etdiminuer le nombre de bactéries dans les fèves de cacao, caractérisé par le fait que l'on soumet lesdites graines ou fèves de cacao dans une chambre de

18

traitement sous une pression élevée à un traitement thermique en présence d'eau tout en introduisant de la chaleur et de l'humidité sous la forme de vapeur d'eau par une entrée débouchant dans le fond de la chambre de traitement puis en libérant la pression d'un seul coup au moyen d'un conduit de décharge ayant un diamètre plus petit que sa longueur et comprenant une vanne qui y est montée.

8. Appareil approprié pour mettre en oeuvre le procédé selon les revendications 1—7, caractérisé par le fait qu'il comprend une cuve de conditionnement, une chambre de traitement munie d'une entrée de vapeur d'eau débouchant dans le fond et un conduit ayant un diamètre plus petit que sa longueur, débouchant de même dans le fond et comportant une vanne qui y est montée et dont la sortie débouche dans une chambre d'expansion tandis que la cuve de conditionnement et la chambre de traitement sont raccordées l'une à l'autre à l'aide d'un conduit qui peut être fermé.

9. Appareil selon la revendication 8, caractérisé par le fait que la chambre de traitement et la chambre d'expansion sont raccordées l'une à l'autre au moyen d'un tuyau en acier soudé.

10. Appareil selon les revendications 8 et 9, caractérisé par le fait que l'entrée de céréales de la chambre d'expansion est pourvue d'une buse remplaçable.

11. Appareil selon la revendication 10, caractérisé par le fait que la buse remplaçable présente une pente de 6 à 10°.

# fig-1

```
┌─────────────────┐
│                 │
│  PRE  TREATMENT │
│                 │
└─────────────────┘
         │
┌─────────────────┐
│                 │
│  CONDITIONING   │
│                 │
└─────────────────┘
         │
┌─────────────────┐
│                 │
│  HEAT TREATMENT │
│                 │
└─────────────────┘
         │
┌─────────────────┐
│                 │
│  EXPANSION      │
│                 │
└─────────────────┘
         │
```

Fig-2

RAW 1000x

EXTRUDER 1.000x

MICRONISER 1000x

PRESCO 1000x